# EUROPÄISCHE PATENTSCHRIFT

(11) **EP 0 408 084 B1**
(45) Veröffentlichungstag und Bekanntmachung des Hinweises auf die Patenterteilung: **21.04.1993**
(21) Anmeldenummer: 90113623.4
(22) Anmeldetag: 16.07.1990
(51) Int. Cl.: G01P 3/488, G01P 3/489

(54) **Umdrehungsdetektor**
Rotation detector
Détecteur de rotation

(30) Priorität: 14.07.1989 DE 3923398
(43) Veröffentlichungstag der Anmeldung: 16.01.1991
(73) Patentinhaber: Hydrometer GmbH, D-91522 Ansbach (DE)
(72) Erfinder: Ziegler, Horst, Prof. Dr., D-4790 Paderborn (DE)
(74) Vertreter: Patentanwälte Dipl.-Ing. R. Splanemann Dr. B. Reitzner Dipl.-Ing. K. Baronetzky

(56) Entgegenhaltungen:
- EP-A- 0 033 800
- DE-A- 1 233 643
- DE-A- 3 213 602
- DE-A- 3 611 862
- US-A- 4 331 917

## Beschreibung

Die Erfindung betrifft einen Umdrehungsdetektor mit einem Rotor, der Rotorwinkelbereiche unterschiedlicher elektromagnetischer Eigenschaften aufweist, und mit mehreren winkelversetzt angeordneten Sensoren, die jeweils einen Schwingkreis enthalten, der jeweils durch die verschiedenen Rotorbereiche so beeinflußt ist, daß er jeweils bei einer impulsartigen Erregung mit einer beeinflussungsgemäß unterschiedlichen Amplitude und/oder Frequenz schwingt, und wobei diese Schwingkreissignale einer Diskriminatorschaltung zugeführt sind, die jeweils ein Über-oder Unterschreiten eines vorgegebenen Schwellwertes der Amplitude oder der Frequenz des Schwingkreissignales eines Schwingkreises als ein Diskriminator-Ausgangssignal meldet, das einer Drehrichtungserkennungslogik zusammen mit den gleichzeitigen Diskriminator-Ausgangssignalen der (des) anderen Schwingkreise (Schwingkreises) zugeführt ist, so daß die Drehrichtungserkennungslogik daraus Drehsignale bildet, die einem Vor-Rückwärtszähler zugeführt sind.

Aus DE-OS 32 13 602 A1 ist eine Dämpfungsdetektorschaltung bekannt, bei der ein Schwingkreis jeweils kurzzeitig erregt wird und danach seine Amplitude mit einem fest vorgegebenen analogen Schwellwert verglichen wird und jeweils bei Überschreitung dieses Schwellwertes ein Zählimpuls erzeugt wird, der einen Zähler beaufschlagt, dessen Zählerstand bei Überschreiten eines fest vorgegebenen digitalen Schwellwertes eine Signalabgabe bewirkt.

Es ist bekannt, insbes. für Durchflußmesser mit einem Wasserrad, eine Umdrehungsdetektoranordnung zu verwenden, mit einem Rotor, der Rotorbereiche unterschiedlicher elektromagnetischer Eigenschaften aufweist, und mit mehreren verschiedenen Winkelpositionen des Rotors zugeordneten, Sensoren, die jeweils einen Schwingkreis enthalten, der durch die verschiedenen Rotorbereiche bezüglich der Dämpfung, der Resonanzfrequenz und/oder einer Kopplung zu einem Sender beeinflußt ist und dem eine Schwellwertresultierende Amplituden- und/oder Frequenzänderung bezüglich vorgegebener Grenzwerte signalisiert, wobei diese, von den, den Vergleichsschaltungen zugeordneten, Sensoren signalisierten, Änderungen einer Drehrichtungs-Erkennungslogik zugeführt sind, deren daraus erzeugte Drehsignale einem Vor-Rückwärts-Zählwerk zuführbar sind. Um einen geringen Stromverbrauch für einen mehrjährigen Batteriebetrieb ohne Batteriewechsel zu ermöglichen, werden die Schwingkreise der Sensoren nur jeweils relativ kurzzeitig auf eine gut diskriminierbare Amplitude erregt und dabei der zeitliche Abstand der Erregungen so gewählt, daß die unterschiedlichen Winkellagen der verschiedenen Rotorbereiche zu den Sensoren bei einer höchsten zu erwartenden Drehzahl des Rotors erkennbar und auswertbar sind. Hierzu werden die Schwingkreise jeweils batteriestromsparend mit nur einem Spannungs- oder einem Stromimpuls erregt, und dann wird die Anzahl der folgenden Schwingungen gezählt, die eine analog vorgegebene Amplitudenschwelle überschreiten, so daß das Zählergebnis der jeweiligen Kreisgüte proportional ist. Ein bezüglich der bei einer hohen bzw. bei einer niedrigen Dämpfung auftretenden Zählergebnisse mittlerer digitaler Vergleichswert dient der Erkennung des jeweiligen Beeinflussungszustandes durch den wirksamen Rotorbereich, und demgemäß wird ein Zustandssignal an die Umdrehungs- und Drehrichtungserkennungslogik abgegeben. Die Rotorbereiche unterschiedlicher Dämpfung umfassen gewöhnlich jeweils 180°, und die Sensoren sind gewöhnlich um 90° des Drehwinkels gegeneinander versetzt angeordnet. Die Schwingkreiserregung erfolgt dann mindestens vierfach bei der schnellsten Rotorumdrehung, so daß eine maximale Winkelauflösung der Rotorstellung von 90° erreichbar ist. Grundsätzlich weist diese bekannte Anordnung mit einfach erregten, dämpfungsmodulierten Sensorschwingkreisen, verglichen zu solchen Anordnungen mit einer mehrfachen Erregung und Frequenzdiskrimierung sowie verglichen zu einer Kopplungsmodulation mit einem Fremdsendekreis, den geringsten Stromverbrauch und den einfachsten Aufbau auf. Auch sind die jeweiligen Werte der Induktivitäten und der Kapazitäten der Kreisschaltungen innerhalb eines großen Toleranzbereiches praktisch ohne Auswirkung auf das Auswerteergebnis, da jeweils nur die Dämpfung einen Einfluß gemäß dem Auswerteverfahren hat, die hauptsächlich durch den Drahtwiderstand der Induktivität bestimmt ist und somit eng tolerierbar ist.

Bei dieser bekannten Anordnung mit den einfacherregten dämpfungsmodulierten Sensorschwingkreisen ist jedoch die relative Änderung des Zählergebnisses im Detektor geringer als bei einer Kopplungsmodulation, so daß sich Störeinflüsse von Temperaturänderungen und äußeren Magnetfeldern stärker auswirken, da es üblich ist, Ferritkernspulen zu verwenden, um ausreichende Güte zu erreichen.

Aus DE 36 11 862 A1 ist ein Umdrehungsdetektor mit einem einzigen induktiven Dämpfungssensor bekannt, der einen impulsartig erregten Schwingkreis enthält, dessen Schwingungssignale, die in einem vorgegebenen Amplitudenbereich liegen, in einem Zähler erfaßt werden. Der jeweilige Zählerinhalt wird mit einem vorgegebenen festen Schwellwert verglichen, woraus der Dämpfungszustand des Schwingkreises und damit die Rotorstellung, des drehwinkelabhängig dämpfenden Rotors jeweils bestimmt ist.

Der Sensor ist mit einem Ferritkerntransformator aufgebaut, um eine ausreichende Auswertbarkeit der Signale bei geringem Stromverbrauch zu erreichen. Hierdurch ist eine hohe Temperaturabhängigkeit gegeben, die in Verbindung mit dem festen Schwellwert einen engen Arbeitsbereich ergibt. Da nur ein Sensor vorgesehen ist, ist für eine Drehrichtungserkennung eine Diskrimination mehrerer Dämpfungsstufen des Rotors durch den Vergleich des Zählerinhalts mit mehreren eng aneinanderliegenden Schwellwerten erforderlich, wodurch der Temperaturbereich in der die Schaltung anwendbar ist, weiter eingeengt ist.

Es ist Aufgabe der Erfindung, den bekannten, leicht herzustellenden und wenig Strom verbrauchenden Umdrehungsdetektor mit einfacherregten dämpfungsmodulierten Sensorschwingkreisen derart zu verbessern, daß er wesentlich zuverlässiger arbeitet und die Auswirkungen von dämpfungsverändernden Temperatur- und Magnetfeldeinflüssen auf die Schwingkreiskomponenten minimiert sind.

Die Aufgabe wird mit einem Detektor mit dem Mukmalen des Anspruches 1 gelöst.

Mindestens zwei Sensoren werden derart bezüglich des Rotors und seiner unterschiedlichen Rotorbereiche angeordnet, daß deren Beeinflussung durch diese Rotorbereiche komplementär ist, wodurch die Summe der jeweiligen Zählergebnisse der Detektoren bei einer gleichzeitigen oder einer zeitlich so dicht aufeinanderfolgenden Anregung der Sensorschwingkreise, daß zwischenzeitlich nur eine unwesentliche Weiterdrehung des Rotors erfolgen kann, praktisch konstant ist, so daß der auf die Anzahl der zur Summenbildung genutzten Sensoren bezogene Bruchteil dieser periodisch gebildeten Summe als Schwellwert anschließend verwandt, eine sichere Beurteilung des jeweiligen Dämpfungszustandes der einzelnen Sensorschwingkreise erbringt.

Die Bestimmung der relevanten Schwingungsimpulse aller oder paarweise nacheinander erregter Sensorschwingkreise in einem Zähler ergibt eine einfache Schaltungsanordnung. Die jeweils vorher ermittelte und geteilte bzw. halbierte und zwischengespeicherte Summe der Zählergebnisse dient vorteilhaft bei jeder neuen Zählung als Schwellwert für eine gleichzeitige Beurteilung jedes neuen Zählwertes zur Ermittlung der Rotorstellung und einer dementsprechenden Beaufschlagung der Drehrichtungserkennungslogik.

Ändern sich die komplementären Schwingkreise in ihrer Güte durch einen Temperatureinfluß, so daß sich die Zählergebnisse jeweils um z.B. 20% verändern, so ändert sich die so gebildete digitale Schwelle mit, und es lassen sich dadurch auch noch Güteänderungen gleicher Größenordnung, die durch die Rotorbeeinflussung in unterschiedlichen Rotorstellungen bewirkt werden, sicher erkennen, was bei einer festen Schwelle nicht möglich wäre.

Um eine hohe Auflösung der Güteänderung zu erreichen, ist wegen der Quantelung der Zählergebnisse vorteilhaft eine derartige Güte der Schwingkreise vorgesehen und eine relativ zur Anfangsamplitude derartig niedrige analoge Schwelle vorgegeben, daß hohe Schwingungszahlen z.B. zwischen 10 und 64 bei den Zählungen auftreten. Dies läßt sich z.B. mit. einer Kreisgüte zwischen 20 und 70 sowie einer Schwellenhöhe von 1/4 bis 1/10 der Anfangsamplitude erreichen, wobei ein niedriger analoger Schwellwert zu bevorzugen ist, der jedoch in bekannter Weise ausreichend hoch über den Toleranzen und Änderungen der Diskriminatorgenauigkeit zu liegen hat.

Ein Fremdmagnetfeld beeinflußt die Dämpfung des Ferritkernes des Sensors richtungsabhängig. Da die Achsen der Ferritkerne der komplementären Sensoren vorteilhaft gleichgerichtet sind, ergibt sich eine weitgehend gleiche Dämpfungsbeeinflussung dieser Sensoren, so daß dieser Magnetfeldeinfluß ebenso wie der Temperatureinfluß für die Detektorwirkung kompensiert ist. Aus diesem Grunde ist es vorteilhaft vorgesehen, zu jedem Sensor einen komplementären gleichgerichteten Sensor anzuordnen, mit dem durch Summenbildung der diesen Sensoren zugehörige Schwellwert ermittelt wird.

Für sämtliche Sensoren wird vorteilhaft der gleiche analoge Schwellwertkomparator verwandt, indem die Sensoren über einen Analogmultiplexer auf den einen der Komparatoreingänge geschaltet werden. Dadurch treten keine Auswirkungen einer temperatur- oder alterungsbedingten Verschiebung der Komparatorschwelle bezüglich der Detektorwirkung auf, da auch derartige Einflüsse durch die Kompensationswirkung der ständig angepaßten digitalen Schwelle beseitigt werden.

Die Anregung der Schwingkreise geschieht vorteilhaft über einen zeitmäßig gesteuerten Ladeschalter, dessen Schließzeit derart gewählt ist, daß die erste Schwingungsamplitude der Versorgungsspannung entspricht. Da vorteilhaft die gleiche Zeitsteuerung für die Anregung der komplementären Schwingkreise benutzt wird, tritt auch eine weitgehende Kompensation der Einflüsse von Variationen der Zeitsteuerung der Ladeschalter auf. Auch geringfügige Überschreitungen der Schwingungsamplitude über die Versorgungsspannung bleiben ohne Auswirkung auf das Detektionsergebnis.

Eine weitere vorteilhafte Ausgestaltung der Schaltungsanordnung besteht darin, daß der analoge Schwellwert jeweils aus der maximalen Amplitude, die nach einer Anregung auftritt, für den Vergleich zwischengespeichert und durch Spannungsteilung abgeleitet wird.

Die automatische Schwellenerzeugung erbringt eine hohe Winkelgenauigkeit der Lagedetektion des Rotors; deshalb genügt eine relativ langsame Abtastrate, die nur geringfügig über der doppelten maximalen Rotationsfrequenz des Rotors liegen muß, um eine eindeutige Detektion der Umdrehungen zu erbringen. Hierdurch ist der Stromverbrauch minimiert.

Die hohe Genauigkeit der Auflösung, die durch automatische Schwellenwerterzeugung erreicht wird, bietet die Möglichkeit, die Schwingkreisspulen derart auszubilden, daß sie einen relativ großen Winkelbereich des Rotorumfanges überdecken und somit annähernd den anteiligen Sektor des Sensors ausfüllen. Hierdurch ergibt sich eine geringe Abstandsabhängigkeit der Sensorsignale vom Rotorabstand in einem relativ großen Abstandsbereich zum Rotor. Es lassen sich statt der bei Näherungssensoren üblichen teuren Topfspulen einfache sogenannte Entstördrosseln mit einem Stabkern aus Ferrit verwenden, die Massenartikel sind.

Für eine Drehrichtungserkennung sind neben zwei um 180° versetzt angeordneten Sensoren, deren Signale zur Erzeugung der digitalen Schwelle dienen und von denen einer ein Lagesignal nach der digitalen Diskriminierung an die Drehrichtungserkennungslogik liefert, ein dritter Sensor um vorzugsweise 90° versetzt angeordnet, dessen Signal in einfacher Weise mit den gleichen Schwellwerten verglichen und ausgewertet wird und dann ebenfalls der Drehrichtungserkennungslogik zugeführt wird. Um eine eindeutige Drehrichtungserkennung zu erreichen, ist dabei die Ansteuerungsfolge so gewählt, daß die Anregungen etwas mehr als viermal pro schnellste Rotordrehung erfolgen.

Eine besonders vorteilhafte Vorrichtung besteht darin, daß ein vierter Sensor gegenüber dem dritten Sensor angeordnet ist, der mit diesem zusammen zu einer weiteren digitalen Schwellwertbildung genutzt wird. Weiterhin ist eine Diskriminatorlogik vorgesehen, die jeweils die Zählerendstände nach jeder Anregung und anschließendem Abklingen der Schwingung auf eine Mindestanzahl von Schwingungen, z.B. 2 oder 3, prüft und bei deren Unterschreitung ein Fehlersignal erzeugt, das zur Inhibierung der Auswertung des zugehörigen Sensorsignales dient und zwar sowohl bezüglich der Schwellenerzeugung als auch der Drehrichtungserkennung. Die Auswertungen werden dann nur für die übrigen Sensoren vorgenommen. Somit ist eine fehlertolerante Auswertung bezüglich eines defekten Sensors gegeben.

Es ist bei der fehlertoleranten Vorrichtung auch vorteilhaft vorgesehen, den defekten Sensor nicht mehr zu aktivieren, indem das Fehlersignal gespeichert und zur Blockierung des Aktivierungssignales genutzt ist. Hierdurch wird insbes. im Falle eines vorliegenden Kurzschlusses Batteriestrom eingespart. Zur Erhöhung der Sicherheit ist eine Fehlersignalindikation an dem Fehlerspeicher vorgesehen, so daß im Rahmen einer Zählerablesung oder Wartung der Defekt behoben werden kann und so die Redundanz wiederhergestellt wird.

Eine weitere Maßnahme zur Batteriestromeinsparung ist dadurch gegeben, daß stets nur drei der vier Sensoren zyklisch aktiviert sind und deren Signale ausgewertet werden und nur dann, wenn ein Fehlersignal auftritt, ein defekter Sensor abgeschaltet ist und der vierte Sensor durch das Fehlersignal aktiviert ist und sein Signal zur Drehsignal- und Drehrichtungssignalerzeugung ausgewertet wird. Die Drehungs- und Drehrichtungsanalyselogik ist derart ausgestaltet, daß die Signale von je drei der vier Sensoren logisch kombinatorisch geprüft werden, daß jeweils eine Vor- oder Rückwärtsdrehung ermittelt wird.

Eine weitere vorteilhafte Ausgestaltung der Vorrichtung ist dadurch gegeben, daß sie auch bei der Diskriminierung eines zweiten defekten Sensors eine Drehmeldung und eine Drehrichtungserkennung vornimmt, wenn diese beiden funktionierenden Sensoren um 90° gegeneinander versetzt sind. Eine laufende Anpassung des digitalen Schwellwertes erfolgt dann nicht mehr; sondern es wird mit dem letzten gespeicherten Schwellwert weiterhin verglichen. Sind andernfalls die zwei funktionsfähigen Sensoren einander zur Rotorachse gegenüberliegend, so wird die Schwellwertbildung laufend vorgenommen und in der Auswertelogik eine Drehmeldung ermittelt, wobei jedoch keine Drehrichtungserkennung erfolgt, was beispielsweise für einen Durchflußzähler gewöhnlich hilfsweise genügt.

Eine weitere vorteilhafte Ausgestaltung der Vorrichtung ist es, daß bei dem Vorliegen von Fehlerdiskriminierungen dreier Sensoren nur der eine verbleibende Sensor zyklisch aktiviert und sein Signal ausgewertet wird, wobei der letzte digitale Vergleichswert genutzt wird. Die Auswertelogik liefert dann Umdrehungssignale und kein Drehrichtungssignal.

Die Drehmeldungssignale sind vorteilhaft 1/4-Umdrehungssignale, sofern zwei der funktionstüchtigen Sensoren um 90° versetzt sind. Sind nur zwei gegenüberliegende Sensoren oder nur noch einer funktionstüchtig, so wird nur jeweils ein 1/2-Umdrehungssignal abgegeben.

Zur Gewährleistung einer ungestörten Schwingung in den Sensorschwingkreisen werden die jeweils nicht aktiven Kreise kurzgeschlossen, so daß keine störenden Koppelschwingungen und Energieverlagerungen zwischen den Kreisen auftreten können.

Der mechanische Aufbau der Anordnung ist in verschiedener Weise vorzunehmen. In einer ersten Ausführungsform sind die Sensoren stirnseitig einer dünnen Rotorscheibe angeordnet. Vorteile dieser Form sind deren gute Integrierbarkeit in den Kunststoffdeckel der Laufkammer eines Wasserzählers und der maximale Sensoreffekt durch die planparallele Anordnung der Dämpfungsscheibe und der Sensorspulen zueinander, wodurch ein relativ großer Spulenabstand zur Rotorscheibe bei guter Dämpfungswirkung zulässig ist. Weiterhin läßt sich die Dämpfungschicht als gleichmäßig dünne Schicht aus leitendem Material auf die ebene Scheibe leicht auftragen. Diese Ausführung ist vorteilhaft in Wasserdurchflußzählern einzusetzen, in denen die Einbringung von Magneten zwecks Auskoppelung der Drehbewegung wegen der Anlagerung von Magnetitausscheidungen aus dem Wasser an diesen Magneten ungünstig und funktionsstörend wäre.

Eine zweite Ausführungsform besteht aus einem zylindrischen Rotorkörper, der halbschalenförmig mit Modulatormaterial beschichtet ist, und um den auf einem konzentrischen Kreis die zylindrischen Sensorspulen angeordnet sind. Vorteilhaft sind hierbei das geringe Trägheitsmoment des mit kleinem Durchmesser gestalteten Rotors und die preiswerte Herstellbarkeit der Zylinderspulen. Das geringe Trägheitsmoment ist insbes. dann von Vorteil, wenn ein indirekter, magnetisch gekoppelter, Antrieb des Rotors vorgesehen ist, wie dies bei Wasserzählern mit angekoppelten mechanischen Zählwerken üblich ist. Somit können vorhandene Zählwerksarmaturen benutzt und extern mit einer Rotor- und Sensorvorrichtung bestückt werden. Die Elektronikvorrichtung befindet sich dann vorteilhaft außerhalb des korrosionsfördernden Naßbereiches.

Die elektronische Ansteuerungs- und Auswerteschaltung ist für alle Ausführungsformen in gleicher Weise einsetzbar. Sie arbeitet auch mit nicht redundant bestückten Sensoranordnungen mit drei, zwei oder einem Sensor mit entsprechend eingeschränkten Ausgangssignalen für die Umdrehungs- und Drehrichtungssignalisierung. Die gemäß der jeweiligen eingeschränkten Funktionsweise entstehenden 1/4-bzw . 1/2-Umdrehungssignale werden in die nachfolgenden Zähler entsprechend wertgemäß eingespeist.

Die Auswertung der digitalen Vergleichsergebnisse der Zählerstände mit dem digitalen Schwellwert und der gespeicherten Fehleranzeigesignale zwecks Erzeugung der Umdrehungs- und Drehrichtungsmeldesignale sowie die Ansteuerung der Anregungsimpulse der Sensoren wird vorteilhaft mittels einer Ablaufsteuerung oder in einem Mikroprozessor programmgesteuert vorgenommen. Darüber hinaus werden zweckmäßig die Zählerstände und andere interessierende Betriebsdaten, z.B. Einsatzbeginn, Zeitpunkt einer Fehlermeldung, im Mikroprozessorspeicher gehalten und auf ein Abfragesignal zur Anzeige und/oder Ausgabe gebracht. Wird die Vorrichtung zur Überwachung oder Steuerung genutzt, so lassen sich mittels einer Eingabevorrichtung in den Mikroprozessor Vergleichswerte für eine maximal zulässige Drehzahl oder eine vorgegebene Umdrehungszahl oder eine unzulässige Drehrichtung eingeben, mit denen periodisch die entsprechenden Größen verglichen werden und bei deren Erreichen und/oder Überschreiten ein entsprechendes Alarm- oder Steuersignal, z.B. für eine Abschaltung in einer Dosiervorrichtung, ausgegeben wird.

Die variable Dämpfung der Schwingkreise läßt sich vorteilhaft maximieren, indem eine für die gewählte Frequenz und Anordnungsgeometrie geeignete Schichtdicke und eine günstige Leitfähigkeit der Metallschicht ausgewählt wird.

Gemäß einer besonders günstigen Ausgestaltung der Erfindung ist es vorgesehen, daß die Erregung der Schwingkreise jeweils mittels eines zeitlich vorgegebenen Erregungssteuerimpulses erfolgt, dessen Dauer so bemessen ist, daß die erste Schwingungsamplitude etwa der Erregungsspannung entspricht und die Erregungen der symmetrisch gelegenen und dann der weiteren Sensoren in periodischer Folge jeweils nach dem Abklingen der vorher erregten Schwingung erfolgt und diese Folge jeweils etwas mehr als doppelt so schnell ist wie eine schnellste zu detektierende Rotorumdrehung.

Gemäß einer besonders günstigen Ausgestaltung der Erfindung ist es vorgesehen, daß die Erregungssteuerimpulse jeweils nur denjenigen Schwingkreisen zugeführt sind, von denen ein zugeordnetes Freigabesignal vorliegt.

Gemäß einer besonders günstigen Ausgestaltung der Erfindung ist es vorgesehen, daß jeweils alle diejenigen Schwingkreise, denen kein Erregungssteuerimpuls zugeführt ist, durch einen kurzgeschlossen gesteuerten Parallelschalter gebrückt sind.

Gemäß einer besonders günstigen Ausgestaltung der Erfindung ist es vorgesehen, daß die Erregungssteuerung der Multiplexer, die Speicherung der Diskriminatorausgangssignale, die Speicherung der Freigabesignale, die Vor-Rückwärtssignalerzeugung, die Umdrehungssignalerzeugung, die Summenzählersteuerung und gegebenenfalls die Parallelschaltersteuerung durch eine Ablaufsteuerung oder einen dementsprechend programmgesteuerten Mikroprozessor abhängig von einem Zeitgebersignal erfolgt.

Gemäß einer besonders günstigen Ausgestaltung der Erfindung ist es vorgesehen, daß die Schwingkreise Schwingkreisspulen enthalten, die je einen Ferritstabkern enthalten, der achsparallel zu dem Rotor angeordnet ist, der zylindrisch ausgebildet ist und mantelseitig die Rotorabschnitte mit unterschiedlichem Dämpfungsmaterial trägt.

Gemäß einer besonders günstigen Ausgestaltung der Erfindung ist es vorgesehen, daß der Rotor über einem Magnetkoppelglied mit einem Meßobjekt, z.B. einem Wasserrad, durch eine Gehäusewandung drehfest verbunden ist.

Gemäß einer besonders günstigen Ausgestaltung der Erfindung ist es vorgesehen, daß die Schwingkreise jeweils Schwingkreisspulen aufweisen, die je einen Ferritkern enthalten, der stirnseitig eines scheibenförmigenn Rotors achsparallel zu diesem angeordnet ist, der stirnseitig die Rotorabschnitte mit unterschiedlichem Dämpfungsmaterial trägt.

Gemäß einer besonders günstigen Ausgestaltung der Erfindung ist es vorgesehen, daß die Schwingkreisspulen jeweils benachbarter Sensoren so ausgebildet sind, daß deren beeinflußbare Bereiche aneinander anschließen.

Gemäß einer besonders günstigen Ausgestaltung der Erfindung ist es vorgesehen, daß das Dämpfungsmaterial aus einer Metallbeschichtung besteht, die in ihrer Materialwahl und Schichtdicke an eine maximale elektrische Kreisbedämpfung der erregten Schwingkreise angepaßt ist.

Weitere Einzelheiten, Vorteile und Merkmale der Erfindung sind in der nachstehenden Beschreibung eines Ausführungsbeispiels der Erfindung anhand der Zeichnung näher erläutert.

Es zeigen:
- Fig. 1: ein Blockschaltbild eines Umdrehungsdetektors;
- Fig. 2: eine Detailabwandlung zu Fig. 1;
- Fig. 3: eine Seitenansicht einer Sensoranordnung zu einem zylindrischen Rotor;
- Fig. 4: eine Stirnansicht der Sensoranordnung gemäß Fig. 3.
- Fig. 5: einen Querschnitt V-V einer Sensoranordnung zu einem scheibenförmigen Rotor; und
- Fig. 6: eine Seitenansicht zu Fig. 5.

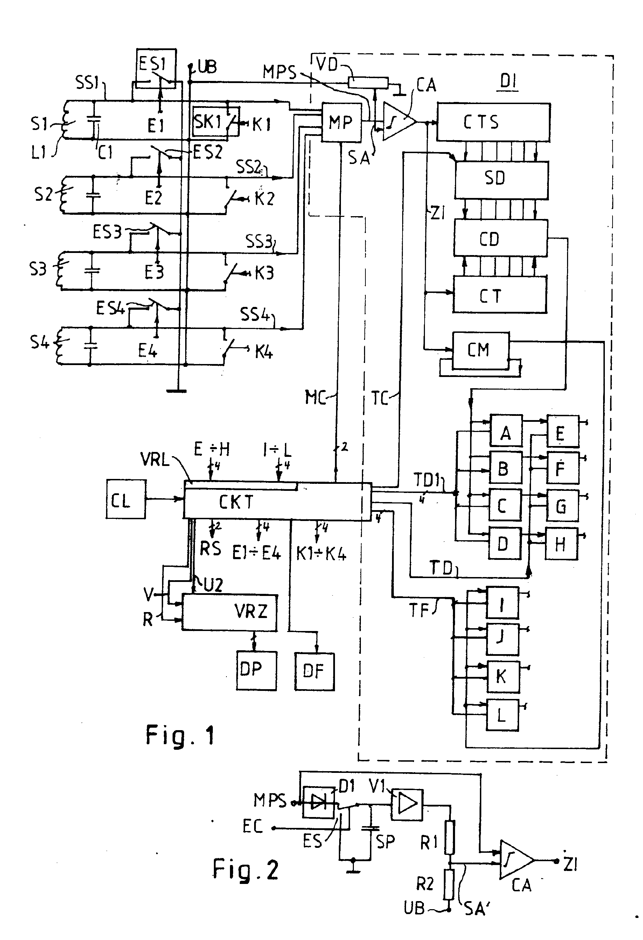

Fig. 1 zeigt ein Blockschaltbild des Umdrehungsdetektors. Die Sensoren bestehen jeweils aus einem Schwingkreis (S1 - S4) mit einer Schwingkreisspule (L1) und einer Schwingkreiskapazität (C1). Die Erregung der an die Batteriespannung (UB) angeschlossenen Schwingkreise erfolgt durch eine zeitgesteuerte Schaltverbindung zur Masse mit Schaltern (ES1 - ES4) durch die Erregungs-Schaltimpulse (E1 - E4). Die Schaltkreissignale (SS1 - SS4) sind über einen Multiplexer (MP) auf einen Analog schwellwertvergleicher (CA) geführt, dessen digitalisiertes Ausgangssignal als ein Zählsignal (ZI) auf einen als Summenzähler ausgebildeten Mittelwertspeicher (CTS), einen Diskriminatorzähler (CT) und einen Minimumdiskriminator (CM) geführt ist. Der Analogschwellwertschaltung (CA) ist einerseits das Multiplexerausgangssignal (MPS) und zum Vergleich ein Analogschwellwert (SA) zugeführt, der mit einem Spannungsteiler (VD) aus der Batteriespannung (UB) gewonnen ist. Alternativ können die Schwingkreise ständig einseitig an Masse liegen und mit der Batteriespannung erregt werden. demgemäß muß die Vergleicherspannung nahe der Nullspannung liegen.

Der Summenzählerinhalt wird, entsprechend der Anzahl der summierten Erregungsvorgänge geteilt, mit einem Transferimpuls (TC) in einen Speicher als Digitalschwellwert (SD) übernommen. Die Teilung erfolgt unmittelbar bei der Summierung durch die niedrigstwertigen Summenzählerstellen, deren Inhalt nicht in den Schwellwertspeicher übertragen wird. Der Digitalschwellwert ist einem Digitalvergleicher (CD) einerseits zugeführt, dem andererseits der Zählerstand des Diskriminatorzählers (CT) zugeführt ist und dessen Ausgangssignal jeweils mit einem dem vorher erregten Schwingkreis (S1 - S4) entsprechenden Übertragungsimpuls (TD1) in ein zugehöriges Zwischenspeicherelement (A - D) eingespeichert und zur weiteren Auswertung bereitgestellt wird.

Der Minimumdiskriminator (CM) ist ein auf das vorgegebene Minimum voreingestellter, selbstsperrender Zähler, dessen Ausgangssignal als Freigabesignal mit einem der Übernahmeimpulse (TF), der jeweils dem vorher erregten Schwingkreis (S1 - S4) zugeordnet ist, in ein entsprechendes Speicherelement (I - L) übernommen wird. Jeweils wenn eine zyklische Abfrage aller Sensoren (S1 - S4) beendet ist, erfolgt eine Übernahme der zwischengespeicherten Diskriminatorwerte aus dem zugehörigen Zwischenspeicherelement (A - D) in ein jeweils zugehöriges weiteres Speicherelement (E - H) mit einem Übernahme steuerimpuls (TD).

Die so gewonnenen Diskriminatorausgangssignale (E - H) und die Freigabesignale sind einer Vor-Rückwärtsauswertelogik (VRL) zugeführt, die bei einer Veränderung der Eingangssignale dieser entsprechend einen Vorwärtszählimpuls (V), einen Rückwärtszählimpuls (R) oder einen Halbumdrehungsimpuls (U2) an einen Vor-Rückwärtszähler (VRZ) abgibt, dessen Inhalt auf einer Anzeigevorrichtung (DP) ausgegeben wird.

Die gesamte Steuerung der Vorrichtung erfolgt über eine Ablaufsteuervorrichtung (CKT), die vorzugsweise aus einem programmgesteuerten Mikroprozessor besteht. Die Vor-Rückwärtserkennungslogik (VRL) mit der Freigabe- oder Fehlersignalauswertelogik ist Teil des Programmablaufes und vorzugsweise als Tabellenlogik ausgebildet. Der zeitliche Steuerungsablauf wird durch eine Taktgeberschaltung (CL) bestimmt, aus deren Takt sowohl die Erregungszeit und somit die Schließzeiten der Erregungsschalter (ES1 - ES4) durch die Erregungssteuerimpulse (E1 - E4) gewonnen werden als auch deren zeitlicher Abstand bestimmt wird.

Parallel zu den Schwingkreisen (S1 - S4) sind Kurzschlußschalter (SK1) vorgesehen, die durch die Steuerimpulse (K1 - K4) stets kurzgeschlossen gehalten sind, außer wenn der zugehörige Schwingkreis (S1 - S4) gerade über einen Erregungssteuerimpuls (E1 - E4) angeregt wird und angeregt worden ist, solange, bis ein anderer Schwingkreis (S1 - S4) erregt wird.

Die Ablaufsteuerung (CKT) steuert weiterhin die Diskriminatorvorrichtung (DI) im zeitlichen Ablauf der Verknüpfungen der Signale. Das binär kodierte Multiplexersteuersignal (MC) verbindet in dekodierter Form den Multiplexer (MP) je mit dem erregten Schwingkreis (S1 - S4). Das Schwellwertübernahmesignal (TC) übernimmt je nach einer Summenbildung und, wenn die zugehörigen Freigabesignale (I - L) vorliegen, den neuen digitalen Schwellwert in den Schwellwertspeicher (SD). Die Zähler (CTS, CT, CM) werden jeweils über ein geeignetes Rücksetzsignal (RS) vor deren Zählbeginn zurückgesetzt. Wenn nach einer Erregung der Zählvorgang sicher abgeschlossen ist, werden die dem vorher je erregten Schwingkreis (S1 - S4) zugeordneten Übertragungssignale (TD1, TF) erzeugt und damit die Zwischenspeicherung oder Speicherung der Schwellwertvergleicher-Ausgangssignale und der Freigabesignale bewirkt.

Die Erregungsschalter (ES1 - ES4) sind vorteilhaft niederohmige MOS-Transistoren, die mit einer Begrenzerdiode für die Kappung des nach dem Abschalten auftretenden Überschwingens der Amplitude über die anderseitige Schalterspannung zu dieser gebrückt sind.

Die Kurzschlußschalter sind MOS-Transistoren, die eine ausreichende Dämpfung der Schwingkreise erbringen, so daß keine Schwingungen auftreten.

Soweit ein ausreichend schneller Mikroprozessor vorgesehen ist, läßt sich auch der digitale Teil der Diskriminatorvorrichtung (DI) und auch der Vor-Rückwärtszähler (VKZ) programmgesteuert in diesem realisieren, wobei dessen Speicher die Zählerstände und die Speicherelemente aufnimmt. Liegt für einen der Schwingkreise kein Freigabesignal (I - L) vor, so wird dementsprechend eine Fehleranzeige auf einer Fehleranzeigevorrichtung (DF) von der Steuervorrichtung (CKT) ausgegeben. Die Mehrfachleitungsbündel sind mit Querstrichen und kleinen Ziffern bezeichnet, die deren Adernanzahl angibt, und deren Abzweigungen sind mit Querstrichen bezeichnet.

Fig. 2 zeigt eine alternative Detailschaltung, die der Erzeugung eines amplitudenabhängigen Analogschwellwertes (SA') dient. Das Multiplexerausgangssignal (MPS) wird jeweils über eine Gleichrichterschaltung (D1) einer Speicherschaltung (SP) zugeführt, die dadurch auf die Maximalamplitude aufgeladen wird. Diese wird vorzugsweise über einen Verstärker (V1) dem Spannungsteiler (R1, R2) zugeführt, dessen Ausgangssignal (SA') dem Analogschwellwertvergleicher (CA) als Schwellwert zugeführt ist. Bei jeder neuen Erregungssteuerung wird durch einen Löschimpuls (EC) die Speicherschaltung (SP) mit einem Umschalter (ES) entladen.

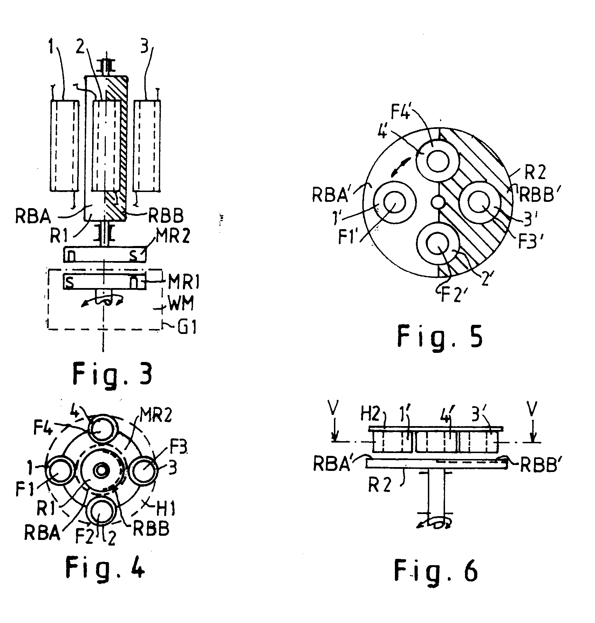

Fig. 3 zeigt eine Seitenansicht einer ersten bevorzugten Sensoranordnung, und Fig. 4 zeigt eine Stirnansicht derselben. Die Sensoren (1 - 4) sind längliche Zylinderspulen mit Ferritkernen (F1 - F4). Sie sind achsparallel um einen länglichen zylindrischen Rotor (R1) eng benachbart zu diesem angeordnet, der zwei verschiedene Halb-Mantelflächen als dämpfungsbeeinflussende Rotorbereiche (RBA, RBB) hat, die Sensoren (1 - 4) sind in einer gestrichelt dargestellten Halterung (H1) befestigt. Endseitig trägt die Rotorachse eine Magnetkoppelscheibe (MR2), die magnetisch mit einer koaxialen, stirnseitig dazu liegenden weiteren Magnetkoppelscheibe (MR1) drehfest gekoppelt ist, die mit einem Rotor in einem Wassermesser (WM) verbunden ist und innerhalb von dessen Gehäuse (G1) angeordnet ist, durch das das Koppelmagnetfeld hindurchgreift.

Fig. 5 zeigt einen Schnitt V-V einer weiteren bevorzugten Ausführungsform des Rotors (R2) mit vier achsparallel dazu, stirnseitig dicht benachbart zu ihm angeordneten Sensoren (1' - 4'), wie Fig. 6 in der Seitenansicht zeigt. Diese Sensoren sind relativ flach aufgebaut, und sie sind mit Ferritkernen (F1'- F4') bestückte zylindrische oder scheibenförmige Spulen, die einen großen Flächenbereich des Rotors abdecken. Die Spulen sind auf einer Montageplatte (H2) befestigt oder unmittelbar auf dieser durch Ätzung einer Kupferkaschierung erzeugt. Der Rotor (R2) ist stirnseitig halbkreisförmig mit Dämpfungsmaterial beschichtet, so daß die Rotorbereiche (RBA', RBB') dort gebildet sind. Deren Dämpfungsschicht ist aus leitendem Material von wenigen Mikrometern Dicke aufgebracht. Da der Abstand des Modulatorbereichs ein geringer Bruchteil der Sensorspulenabmessungen ist, beträgt die Dämpfungsänderung zwischen den beiden extremen Rotorstellungen bis zu 50%.

Um eine möglichst hohe, digital gut diskriminierbare Schwingungszahl des Sensorschwingkreises zu erreichen, wird die Spule mit einer möglichst geringen Dämpfung ausgelegt, so daß bei einer Amplitudenschwelle von 1/e - 1/10 der Anfangsamplitude etwa 16 - 64 Schwingungen gezählt werden. Ein praktischer Wert der Sensorinduktivität ist 1 mHy und der der Schwingkreiskapazität 100 pF. Eine Erregungszeit von vorzugsweise 100 ns, die einen Bruchteil der Halbwellenzeit beträgt, führt bei einem typischen Ladeschalterinnenwiderstand von 100 Ohm zu einer derartigen Schwingkreisaufladung, daß nur ein entsprechend kleiner Bruchteil der Energie bei der Überschreitung der Versorgungsspannung durch die erste Halbschwingung mittels einer Abfangdiode rückgespeist oder vernichtet wird, da die Ladezeitkonstante des Kondensators viel kürzer ist als die Ladezeit und da die Stromaufnahme der Induktivität während der kurzen Ladezeit relativ gering ist. Die Toleranzen des Schalterwiderstandes, der Kapazität und der Induktivität werden durch diese Kappung der Anfangsamplitude weitgehend abgefangen, und bei der Spannungsbegrenzung wird nur wenig Energie in der Abfangschaltung verbraucht.

Die aufeinanderfolgende Erregung der symmetrisch angeordneten Sensoren (1, 3; 2, 4) erfolgt beispielsweise mit 128 Mikrosekunden Abstand, so daß sich der Rotor um nur 2° weitergedreht hat, wenn eine übliche Maximaldrehzahl von 40 U/s vorliegt, so daß der Asymmetriefehler nur äußerst gering ist, wenn die durch die Erregungsfolge erzeugten Schwingungen summiert werden. Die Folgefrequenz der einmaligen Erregung aller Sensoren beträgt beispielsweise 256 Hz, so daß bei der genannten Maximalumdrehungszahl eine hohe Auflösung erreicht wird. Da in der Folge von 256 Hz auch die Schwellwerte neu gebildet werden, sind langsamere Änderungen von äußeren Magnetfeldern nicht störend.

## Patentansprüche

1. Umdrehungsdetektor mit einem Rotor (R1, R2), der Rotorwinkelbereiche (RBA, RBB; RBA', RBB') unterschiedlicher elektromagnetischer Eigenschaften aufweist, und mit mehreren winkelversetzt angeordneten Sensoren (1, 2, 3, 4; 1' - 4'), die je mit einem Schwingkreis (S1 - S4) verbunden sind, wobei jeder Sensor (1, 2, 3, 4; 1', 2', 3', 4') je durch die verschiedenen Rotorbereiche (RBA, RBB) so beeinflußbar ist, daß der zugehörige Schwingkreis (S1 - S4) bei einer impulsartigen Erregung mit einer beeinflussungsgemäß unterschiedlichen Amplitude und/oder Frequenz schwingt, und wobei diese Schwingkreissignale (SS1 - SS4) einer Diskriminatorschaltung (DI) zugeführt sind, die je ein Über- oder Unterschreiten eines vorgegebenen Schwellwertes (SA, SD) der Amplitude oder der Frequenz des Schwingkreissignales eines Schwingkreises (S1) als ein Diskriminatorausgangssignal (A) meldet, das einer Drehrichtungserkennungslogik (VRL) zusammen mit den gleichzeitigen Diskriminatorausgangssignalen (B, C, D) der/des anderen Schwingkreise/Schwingkreises (S2, S3, S4) zugeführt ist, so daß die Drehrichtungserkennungslogik (VRL) daraus Drehsignale (V, R) bildet, die einem Vor-Rückwärtszähler (VRZ) zugeführt sind, dadurch **gekennzeichnet,** daß mindestens zwei der Sensoren (1 - 4) so bezüglich der unterschiedlichen Rotorwinkelbereiche (RBA, RBB) angeordnet sind, daß deren Beeinflussung durch die Rotorwinkelbereiche (RBA, RBB) in jeder Rotorstellung komplementär ist, so daß ein aus deren Schwingkreissignalen (SS1 - SS4) in einem Mittelwertspeicher (CTS) gebildeter Mittelwert nahezu rotorstellungsunabhängig ist, daß proportional zu diesem Mittelwert der Schwellwert (SD) jeweils vorgegeben ist, daß die Diskriminatorschaltung (DI) einen analogen Amplitudendiskriminator (CA) aufweist, der jeweils einen Zählimpuls (ZI) abgibt, wenn das Schwingkreissignal (SS1) einen vorgegebenen Analogschwellwert (SA, SA') überschreitet, und einen digitalen Diskriminator (CT, CD) enthält, der jeweils diejenigen Zählimpulse (ZI) akkumuliert, die nach einer einmaligen Schwingkreiserregung entstehen, und das so gewonnene Zählergebnis je mit dem digital vorgegebenen Schwellwert (SD) vergleicht und vergleichsabhängig das Diskrimininatorausgangssignal (A, B, C, D) abgibt und daß jeweils die den Rotorbereichen (RBA, RBB) komplementär zugeordneten Sensoren (1, 3; 2, 4) gleichzeitig oder aufeinanderfolgend erregt sind und die demzufolge entstehenden Zählimpulse (ZI) jeweils dem Mittelwertspeicher (CTS), der als Summenzähler ausgebildet ist, zugeführt sind und ein auf die Anzahl dieser komplementär zugeordneten Sensoren (1, 3; 2, 4) bezogener Bruchteil des jeweiligen Summenzählerendstandes als der digitale Schwellwert (SD) vorgegeben ist.

2. Umdrehungsdetektor nach Anspruch 1, dadurch gekennzeichnet, daß der Analogschwellwert (SA, SA') als ein Bruchteil einer Erregungsspannung (UB) bei der Schwingkreiserregung oder einer jeweils gespeicherten Maximalamplitude der Schwingkreisamplitude vorgegeben ist, und insbesondere der den Analogschwellwert (SA, SA') bestimmende Bruchteil 1/e bis 1/10 beträgt.

3. Umdrehungsdetektor nach einem der vorstehenden Ansprüche, dadurch gekennzeichnet, daß die unterschiedlichen Rotorwinkelbereiche (RBA, RBB) zur Rotorachse symmetrisch gestaltet und komplementär ausgebildet sind und die den komplementären Rotorwinkelbereichen (RBA, RBB) zugeordneten Sensoren (1, 3; 2, 4) symmetrisch zur Rotorachse angeordnet sind und insbesondere sich die unterschiedlichen Rotorbereiche (RBA, RBB; RBA', RBB') jeweils über 180° des Rotors (R1, R2) mantelseitig und/oder stirnseitig erstrecken.

4. Umdrehungsdetektor nach Anspruch 3, dadurch gekennzeichnet, daß zwei der Sensoren (1, 2, 3, 4) unsymmetrisch, z.B. um 90°, versetzt bezüglich der Rotorachse angeordnet sind und zu mindestens einem von diesen ein weiterer Sensor (3, 4, 1, 2) bezüglich der Rotorachse symmetrisch gelegen ist, wobei insbesondere zu sämtlichen digitalen Schwellwertvergleichen der gleiche, aus nur einem Summenzählerstand gebildete, digitale Schwellwert (SD) oder je zu den digitalen Schwellwertvergleichen der Signale der symmetrisch gelegenen Sensoren (1, 3; 2, 4) jeweils der aus deren Signalen gewonnene digitale Schwellwert (SD) dem digitalen Diskriminator (CD) zugeführt ist.

5. Umdrehungsdetektor nach einem der vorstehenden Ansprüche, dadurch gekennzeichnet, daß die Schwingkreise (S1 - S4) über einen Multiplexer (MP) jeweils in einer gemäß ihrer Erregung zeitlichen Folge mit nur einer Diskriminatorschaltung (DI) verbunden sind, deren Diskriminatorausgangssignal (A, B, C, D) entsprechend multiplexiert jeweils zugeordnet gespeichert der Drehrichtungserkennungslogik (VRL) zugeführt ist.

6. Umdrehungsdetektor nach einem der vorstehenden Ansprüche, dadurch gekennzeichnet, daß die Diskriminatorschaltung (DI) einen Mindestschwellwertvergleicher (CM) enthält, dessen Ausgangssignal nur bei einer Überschreitung eines vorgegebenen Mindestschwellwertes ein Freigabesignal (I, J, K, L) des zugehörigen Schwingkreissignales für den digitalen Schwellwertvergleich und/oder für die digitale Schwellwertbildung abgibt und daß insbesondere der Mindestschwellwertvergleicher (CM) dem Multiplexer (MP) und/oder dem Amplitudendiskriminator (CA) nachgeschaltet ist und sein Freigabesignal (I, J, K, L) entsprechend gemultiplext jeweils zugeordnet gespeichert der Drehrichtungserkennungslogik (VRL) zugeführt ist.

7. Umdrehungsdetektor nach Anspruch 6, dadurch gekennzeichnet, daß die Drehrichtungserkennungslogik (VRL) jeweils die Diskriminatorausgangssignale (A, B, C, D; E, F, G, H) zusammen mit den zugehörigen Freigabesignalen (I, J, K, L) derart auswertet, daß dann, wenn von zwei gegeneinander winkelversetzten Sensorpaaren (1, 3; 2, 4) mit jeweils symmetrisch zur Rotorachse angeordneten Sensoren (1, 3; 2, 4) mindestens drei Freigabesignale vorliegen, sowie wenn von zweien der nicht symmetrisch angeordneten Sensoren (1, 2; 2, 3; 3, 4; 4, 1) die zugehörigen Freigabesignale (I, J; I, K; K, L; L, I) vorliegen, einer jeweils auftretenden Diskriminatorausgangssignalfolge gemäß, die Drehsignale (V, R) dem Vor-Rückwärtszähler (VRZ) zugeführt sind und dann, wenn nur die beiden Freigabesignale (I, K; J, L) für eines der Sensorpaare vorliegen, jeweils ein Viertel-Umdrehungssignal (V) pro signalisierter Viertelumdrehung dem Vor-Rückwärtszähler (VRZ) zugeführt ist und dann, wenn nur eines der Freigabesignale (I, J, K, L) vorliegt, ein Halb-Umdrehungssignal (U2) pro signalisierter Halbumdrehung stellengerecht dem Vor-Rückwärtszähler (VRZ) zugeführt ist.

8. Umdrehungsdetektor nach Anspruch 6 oder 7, dadurch gekennzeichnet,daß dann, wenn die Zahl der Freigabesignale (I, J, K, L) geringer als die Zahl der Sensoren (1, 2, 3, 4) ist, ein Fehlerindikator (DF) gesetzt ist.

## Claims

1. Rotation detector with a rotor (R1, R2), which has rotor angular ranges (RBA, RBB; RBA', RBB') with different electromagnetic properties, and several sensors (1, 2, 3, 4; 1' - 4') offset at an angle to each other, each of which is connected to an oscillating circuit (S1 - S4), whereby each sensor (1, 2, 3, 4; 1', 2', 3', 4') can be influenced by the different rotor ranges (RBA, RBB) in such a way that the associated oscillating circuit (S1 - S4) oscillates with a different amplitude and/or frequency according to the influence in the case of pulse-type excitation, these oscillating circuit signals (SS1 - SS4) being fed to a discriminator circuit (DI), which emits each value above or below a predetermined threshold value (SA, SD) of the amplitude or frequency of the signal of an oscillating circuit (S1) as a discriminator output signal (A), which is fed to a direction of rotation recognition logic unit (VRL) together with the simultaneous discriminator output signals (B, C, D) of the other oscillating circuit or circuits (S2, S3, S4), so that the direction of rotation recognition logic unit (VRL) forms from them rotation signals (V, R), which are fed to a forward/backward counter (VRZ), **characterised** in that at least two of the sensors (1-4) are arranged with regard to the different rotor angular ranges (RBA, RBB) in such a way that their influencing by the rotor angular ranges (RBA, RBB) is complementary in each rotor position, so that a mean value formed from their oscillating circuit signals (SS1 - SS4) in a mean value memory (CTS) is virtually independent of the rotor position, that the threshold value (SD) is predetermined in proportion to this mean value in each case, that the discriminator circuit (DI) has an analog amplitude discriminator (CA), which emits a counting pulse (ZI) whenever the oscillating circuit signal (SS1) exceeds a predetermined analog threshold value (SA, SA'), and a digital discriminator (CT, CD), which in each case accumulates those counting pulses (ZI) produced after a single excitation of the oscillating circuit and compares the counting result obtained in this way with the digitally predetermined threshold value (SD) and emits the discriminator output signal (A, B, C, D) as a function of the comparison and that the sensors (1, 3; 2, 4) assigned complementarily to the rotor ranges (RBA, RBB) are in each case excited simultaneously or successively and the resulting counting pulses (ZI) are in each case fed to the mean value memory (CTS) designed as a summation counter, and a fraction of the respective final summation counter reading referred to the number of these complementarily assigned sensors (1, 3; 2,4) is predetermined as the digital threshold value (SD).

2. Rotation detector according to claim 1, characterised in that the analog threshold value (SA, SA') is predetermined as a fraction of an excitation voltage (UB) during excitation of the oscillating circuit or of a stored maximum amplitude of the oscillating circuit amplitude, and in particular the fraction determining the analog threshold value (SA, SA') is 1/e to 1/10.

3. Rotation detector according to one of the above claims, characterised in that the different rotor angular ranges (RBA, RBB) are symmetrical with the rotor axis and designed complementarily and the sensors (1, 3; 2, 4) assigned to the complementary rotor angular ranges (RBA, RBB) are arranged symmetrically with the rotor axis and in particular the different rotor ranges (RBA, RBB; RBA', RBB') each extend over 180° of the rotor (R1, R2) in relation to its casing and/or ends.

4. Rotation detector according to claim 3, characterised in that two of the sensors (1, 2, 3, 4) are arranged asymmetrically, e.g. offset by 90° in relation to the rotor axis and for at least one of these a further sensor (3, 4, 1, 2) is symmetrical in relation to the rotor axis, whereby in particular for all digital threshold value comparisons the same digital threshold value (SD) formed from only one summation counter reading or for each of the digital threshold value comparisons of the signals of the symmetrically arranged sensors (1, 3; 2, 4) the digital threshold value (SD) obtained from their signals in each case is fed to the digital discriminator (CD).

5. Rotation detector according to one of the above claims, characterised in that the oscillating circuits (S1 - S4) are connected via a multiplexer (MP) - in each case in a time sequence according to their excitation - to only one discriminator circuit (DI), the discriminator output signal (A, B, C, D) of which is fed correspondingly multiplexed and stored in assigned form in each case to the direction of rotation recognition logic unit (VRL).

6. Rotation detector according to one of the above claims, characterised in that the discriminator circuit (DI) contains a minimum threshold value comparator (CM), the output signal of which emits a release signal (I, J, K, L) of the associated oscillating circuit signal for the digital threshold value comparison and/or for the digital threshold value formation only when a predetermined minimum threshold value is exceeded and that in particular the minimum threshold value comparator (CM) is connected behind the multiplexer (MP) and/or the amplitude discriminator (CA) and its release signal (I, J, K, L) is fed correspondingly multiplexed and stored in assigned form in each case to the direction of rotation recognition logic unit (VRL).

7. Rotation detector according to claim 6, characterised in that the direction of rotation recognition logic unit (VRL) in each case evaluates the discriminator output signals (A, B, C, D; E, F, G, H) together with the associated release signals (I, J, K, L) in such a way that whenever at least three release signals are present from two pairs of sensors (1, 3; 2, 4) offset at an angle to each other with sensors (1, 3; 2, 4) arranged symmetrically with the rotor axis in each case and whenever the associated release signals (I, J; I, K; K, L; L, I) are present from two of the asymmetrically arranged sensors (1, 2; 2, 3; 3, 4; 4, 1), according to a discriminator output signal sequence, the rotation signals (V, R) are fed to the forward/backward counter (VRZ), and when only the two release signals (I, K; J, L) for one of the pairs of sensors are present, a quarter-revolution signal (V) per signalled quarter-revolution is fed to the forward/backward counter (VRZ), and when only one of the release signals (I, J, K, L) is present, a half-revolution signal (U2) per signalled half-revolution is fed with correct positioning to the forward/backward counter (VRZ).

8. Rotation detector according to claim 6 or 7, characterised in that a fault indicator (DF) is set when the number of release signals (I, J, K, L) is smaller than the number of sensors (1, 2, 3, 4).

## Revendications

1. Détecteur de rotation comprenant un rotor (R1, R2) qui présente des régions angulaires (RBA, RBB, RBA', RBB') possédant des propriétés électromagnétiques différentes et plusieurs capteurs (1, 2, 3, 4 ; 1' - 4') disposés dans des positions décalées angulairement et qui sont reliés chacun à un circuit oscillant (S1 - S4), chaque capteur (1, 2, 3, 4 ; 1', 2', 3', 4') étant influencé par les différentes régions du rotor de telle manière que, en réponse à une ex:itation du type impulsion, le circuit oscillant correspondant (S1 - S4) oscille avec une amplitude et/ou une fréquence variables, différentes selon l'influence, ces signaux (SS1 - SS4) de circuits oscillants étant transmis à un circuit discriminateur (DI) qui signale un passage au-dessus ou au-dessous d'un seuil prédéterminé (SA, SD) de l'amplitude ou de la fréquence du signal d'un circuit oscillant (S1) en tant que signal (A) de sortie du discriminateur, lequel signal est transmis à une logique (VRL) d'identification du sens de rotation avec les signaux (B, C, D) de sortie simultanés du discriminateur de l'autre ou des autres circuit(s) oscillant(s) (S2, S3, S4), de sorte que la logique (VRL) d'identification du sens de rotation forme à partir de cela des signaux de rotation (V, R) qui sont transmis à un compteur de marche réversible (VRZ), caractérisé en ce qu'au moins deux des capteurs (1-4) sont disposés, par rapport aux régions angulaires différentes (RBA, RBB) du rotor, de manière que l'action que les régions angulaires (RBA, RBB) du rotor exercent sur ces capteurs soit complémentaire dans chaque position du rotor, de sorte qu'une valeur moyenne formée à partir de leurs signaux (SS1 - SS4) de circuits oscillants dans une mémoire de moyenne (CTS) soit presque indépendante de la position du rotor, en ce que le seuil (SD) est prédéterminé proportionnellement à cette moyenne, en ce que le circuit discriminateur (DI) comprend un discriminateur d'amplitude analogique (CA) qui émet une impulsion de comptage (ZI) lorsque le signal (SS1) du circuit oscillant dépasse un seuil analogique (SA, SA') prédéterminé, et contient un discriminateur numérique (CT, CD) qui accumule les impulsions de comptage (ZI) qui apparaissent après une excitation simple du circuit oscillant, et qui compare le résultat de comptage ainsi obtenu au seuil (SD) prédéterminé numériquement et, en fonction de la comparaison, émet le signal (A, B, C, D) de sortie du discriminateur, et en ce que les capteurs (1, 3; 2, 4) disposés complémentairement aux régions (RBA, RBB) du rotor sont excités simultanément ou successivement et les impulsions de comptage (ZI) qui apparaissent à la suite de cela sont transmises à la mémoire de moyenne (CTS) qui est constituée par un compteur de somme, et une fraction rapportée au nombre de ces capteurs (1, 3; 2, 4) associés complémentairement, de l'état final du compteur de somme correspondant est fixée comme seuil numérique (SD).

2. Détecteur de rotation selon la revendication 1, caractérisé en ce que le seuil analogique (SA, SA') est fixé sous la forme d'une fraction d'une tension d'excitation (UB) lors de l'excitation du circuit oscillant, ou d'une amplitude maximale mémorisée de l'amplitude du circuit oscillant et, en particulier, la fraction déterminant le seuil (SA, SA') est de 1/e à 1/10.

3. Détecteur de rotation selon l'une des revendications précédentes, caractérisé en ce que les différentes régions angulaires (RBA, RBB) du rotor sont d'une configuration symétrique par rapport à l'axe du rotor et sont de constitutions complémentaires, et les capteurs (1, 3 ; 2, 4) associés aux régions angulaires (RBA, RBB) complémentaires du rotor sont disposés symétriquement par rapport à l'axe du rotor et, en particulier les différentes régions (RBA, RBB ; RBA', RBB') du rotor s'étendent chacune sur 180° du rotor (R1, R2) sur la surface latérale et/ou sur la face frontale.

4. Détecteur de rotation selon la revendication 3, caractérisé en ce que deux des capteurs (1, 2, 3, 4) sont disposés dans des positions décalées asymétriquement, par exemple de 90°, par rapport à l'axe du rotor, et qu'un autre capteur (3, 4, 1, 2) est disposé dans une position symétrique d'au moins une de ces régions par rapport à l'axe du rotor, et, en particulier, pour toutes les comparaisons numériques de seuil, le même seuil numérique (SD), formé à partir d'un seul état de compteur de somme, est transmis au discriminateur (CD) ou encore, pour les comparaisons numériques de seuil des signaux capteurs (1, 3 ; 2, 4) disposés symétriquement, le seuil (SD) numérique obtenu à partir de leurs signaux est transmis au discriminateur numérique (CD).

5. Détecteur de rotation selon l'une des revendications précédentes, caractérisé en ce que les circuits oscillants (S1 - S4) sont reliés, à travers un multiplexeur (MP), dans l'ordre de succession de leur excitation, à un seul circuit discriminateur (DI) dont le signal (A, B, C, D) de sortie de discriminateur est transmis à la logique (VRL) d'identification du sens de rotation, sous la forme multiplexée de façon correspondante et mémorisée et associée.

6. Détecteur de rotation selon l'une des revendications précédentes, caractérisé en ce que le circuit discriminateur (DI) comprend un comparateur (CM) de seuil minimum dont le signal de sortie ne fournit qu'en cas de dépassement d'un seuil minimum prédéterminé un signal de validation (I, J, K, L) du signal de circuit oscillant correspondant pour la comparaison numérique du seuil et/ou pour la formation numérique du seuil et en ce qu'en particulier le comparateur (CM) de seuil minimum est connecté en aval du multiplexeur (MP) et/ou du discriminateur d'amplitude (CA) et son signal de validation (I, J, K, L) est transmis à la logique (VRL) d'identification du sens de rotation sous la forme multiplexée de façon correspondante et mémorisée et associée.

7. Détecteur de rotation selon la revendication 6, caractérisé en ce que la logique (VRL) d'identification du sens de rotation exploite les signaux (A, B, C, D ; E, F, G, H) de sortie du discriminateur, conjointement avec les signaux de validation (I, J, K, L) correspondants de telle manière qu'en présence d'au moins trois signaux de validation issus de deux paires de capteurs (1, 3 ; 2, 4) décalées angulairement l'une par rapport à l'autre qui comprennent chacune des capteurs (1, 3 ; 2, 4) disposés symétriquement par rapport à l'axe du rotor, ainsi qu'en présence des signaux de validation (I, J ; I, K ; K, L ; L, I) issus de deux des capteurs (1, 2 ; 2, 3 ; 3, 4 ; 4, 1) disposés asymétriquement l'un par rapport à l'autre, les signaux de rotation (V, R) sont transmis au compteur réversible (VRZ) conformément à une succession de signaux de sortie du discriminateur qui apparaissent à ce moment et, lorsque seuls les deux signaux de validation (I, K ; J, L) pour une des paires de capteurs sont présents, un signal de quart de tour (V) par quart de tour signalé est transmis au compteur réversible (VRZ) et, lorsque seul un des signaux de validation (I, J, K, L) est présent, un signal de demi-tour (U2) par demi-tour signalé est transmis en bonne position au compteur réversible (VRZ).

8. Détecteur de rotation selon la revendication 6 ou 7, caractérisé en ce que, lorsque le nombre de signaux de validation (I, J, K, L) est inférieur au nombre des capteurs 1, 2, 3, 4), un indicateur de défaut (DF) est mis en action.
